**Europäisches Patentamt**

**European Patent Office**

**Office européen des brevets**

(19)

(11) Veröffentlichungsnummer: **0 134 190**
A2

# EUROPÄISCHE PATENTANMELDUNG

(12)

(21) Anmeldenummer: **84810181.2**

(22) Anmeldetag: **11.04.84**

(51) Int. Cl.⁴: **G 05 B 17/00**, G 05 D 23/19, B 26 F 3/06

(30) Priorität: **01.07.83 CH 3630/83**

(43) Veröffentlichungstag der Anmeldung: **13.03.85** Patentblatt 85/11

(84) Benannte Vertragsstaaten: **BE DE FR IT SE**

(71) Anmelder: **GEBRUEDER LOEPFE AG, Kastellstrasse 10, CH-8623 Wetzikon (CH)**

(72) Erfinder: **De Coi, Beat, St. Gallerstrasse 47, CH-7320 Sargans (CH)**
Erfinder: **Keller, Hans-Peter, Büelmattstrasse 1, D-8646 Wagen (DE)**

(74) Vertreter: **Travnicek, Richard, c/o GEBRUEDER LOEPFE AG Kastellstrasse 10, CH-8623 Wetzikon (CH)**

(54) **Regelverfahren und Regeleinrichtung für eine Vorrichtung oder Vorrichtungsgruppe und Vorrichtung mit einer Regeleinrichtung.**

(57) Das Regelverfahren benutzt einen Simuliervorgang für wenigstens eine Zustandsgrösse einer zu steuernden Vorrichtung und regelt jene nach.

Dabei wird eine Kennlinie mit dem Fusspunkt bei einem Leerlaufwert bis zu einem Arbeitswert durchlaufen. Bei einer Nachregelung wird beim Momentanwert der Zustandsgrösse mit der Regelung begonnen. Dabei entspricht der Wert der Regelgrösse dem des Leerlaufzustandes. Dies bringt den Vorteil eines definierten Ausgangspunktes für die Regelung. Eine Regeleinrichtung zur Durchführung des Regelverfahrens weist eine Serienschaltung aus einem Eingangskreis, einen Regelkreis mit einer Simuliereinrichtung für die Regelung einer Vorrichtung und einen Steuerkreis für eventuell mit der Vorrichtung verkettete andere Maschinen auf. Dabei ist die Simuliereinrichtung nach Kennlinien oder Vorrichtungsparametern einstellbar.

Eine andere Regeleinrichtung erfüllt dieselbe Funktion unter Verwendung eines Rechners mit entsprechend modifizierten Gliedern.

B E S C H R E I B U N G

Die Erfindung bezieht sich auf ein Regelverfahren und eine Regeleinrichtung für eine Vorrichtung oder Vorrichtungsgruppe. Insbesondere kann die Vorrichtung zur Bearbeitung von Gewebekanten eingerichtet und beispielsweise eine elektrothermische Schere sein.

Gewebekanten werden beim Weben in vielen Fällen und abhängig vom Webverfahren abgetrennt. Der neu entstandene Geweberand muss verfestigt werden.

Bei Geweben, welche Kunstfaseranteile aufweisen, wird die Abtrennung der Webkante vielfach durch eine thermische Schere vorgenommen, welche die neue Gewebekante während des Trennvorganges bereits verschweisst. Bei Geweben ohne wesentlichen Kunstfaseranteil müssen besondere Massnahmen getroffen und spezielle Vorrichtungen verwendet werden, um die Webkanten zu verfestigen.

Bei beiden Gruppen ist jedoch eine genaue Steuerung der Funktion dieser Bearbeitungseinrichtungen in Abhängigkeit von den im Gewebe verwandten Materialien erforderlich.

Dies ist bei den bisher bekanntgewordenen Einrichtungen, insbesondere bei den bekannten Thermoscheren, nicht der Fall.

Beispielsweise weist eine bekannte Thermoschere einen Heizstab auf, welcher in einem Gelenk, das ein mit dem Stab gekuppeltes Potentiometer enthält, schwenkbar und gegen die Gewebebahn abstehend gelagert ist. Er wird von einer Feder gegen die Stirnkante einer Gewebebahn gedrückt. In der nahezu vertikalen Leerlaufstellung wird durch das Po-

./.

tentiometer ein solcher Strom dem Stab zugeführt, dass sich dieser nicht stark oder nicht erhitzt. Bei Auslenkung des Stabes durch die laufende Gewebebahn schaltet das Potentiometer einen solchen Strom an den Heizstab, dass dieser das Gewebe durchtrennen kann.

Diese Thermoschere hat den Nachteil, dass der Heizstab nach dem Stillstand der Stoffbahn und Abschalten des Schneidstromes zufolge seiner Restwärme das Gewebe noch weiter schmilzt. Da sich die Gewebebahn nicht mehr bewegt, erfolgt so eine Beschädigung des Gewebes in der Umgebung der Ruhelage des nur langsam abkühlenden Stabes.

Eine andere elektrothermische Schneidvorrichtung (DE 31 40 560) weist zum Regulieren der Stromzufuhr während des Arbeits- bzw. des Stillstandsintervalls eine Schaltungsanordnung auf. Diese stellt zu Beginn des Arbeitsintervalls automatisch eine höhere Stromzufuhr ein und schaltet diese am Ende des Arbeitsintervalls wieder ab. Dazu weist die Schaltungsanordnung nach dem Phasenanschnittverfahren arbeitende Schaltkreise mit einstellbaren Zeitgliedern und eine vom Antrieb der Maschine betätigte Schaltvorrichtung auf. Die Zeitkonstante des ersten Zeitgliedes hängt von der Stellung eines von der Verarbeitungsmaschine gesteuerten Schliesskontaktes ab. Die beiden Zeitglieder bewirken zusammen mit einer Leistungssteuerstufe eine Phasenanschnittsteuerung, deren Zündwinkel durch die beiden Zeitglieder bestimmt wird.

Die Grösse der Zündwinkel bestimmt den Einsatz und die Dauer des Stromflusses durch die Leistungssteuerstufe und die Schneidvorrichtung. Dadurch ist die Anpassung des Stromflusses an die Art und Dicke des zu trennenden Gewebes sowie an die Arbeits- bzw. Stillstandsintervalle anpassbar.

./.

- 3 -                           0134190

Ein wesentlicher Nachteil dieser Schaltungsanordnung ist der sehr langsame Temperaturanstieg an der oder den Scheren beim Umschalten vom Standintervall auf das Betriebsintervall. Für schnellaufende Maschinen erfolgt dieser Temperaturanstieg zu langsam, was zu Gewebeausschuss führt.

Aufgabe der Erfindung ist die Schaffung eines Regelverfahrens und einer Regeleinrichtung für eine Vorrichtung oder eine Vorrichtungsgruppe, um den Wechsel zwischen je zwei Werten wenigstens einer Zustandsgrösse sehr rasch vorzunehmen. Beispielsweise soll bei Umschaltung von der Stand- oder Leerlauffunktion auf die Arbeitsfunktion der Wertwechsel sehr rasch erfolgen. Insbesondere soll eine solche Regeleinrichtung mit einer Vorrichtung zum Trennen der Webkanten von der Gewebebahn verbunden sein.

Die Lösung dieser Aufgabe wird erreicht durch ein Regelverfahren gemäss dem kennzeichnenden Teil des Anspruchs 1 und durch eine Regeleinrichtung gemäss dem kennzeichnenden Teil des Anspruchs 8.

Darüberhinaus kann das Regelverfahren die Merkmale der Ansprüche 2 bis 7, die Regeleinrichtung die Merkmale 9 bis 14 aufweisen und die zu regelnde Vorrichtung die Merkmale der Ansprüche 15 bis 18 aufweisen.

Weitere Einzelheiten und Merkmale der Erfindung ergeben sich aus der beispielsweisen Beschreibung des Regelverfahrens und Ausführungsbeispielen der Regeleinrichtung sowie der Vorrichtung anhand der Zeichnung.

./.

In dieser zeigt

Fig. 1    die Kennlinien für die Annahme der Arbeitstemperatur bei je einem Gerät nach dem Stand der Technik und gemäss der Erfindung

Fig. 2    ein Blockfunktionsschaltbild einer ersten Variante einer Regeleinrichtung

Fig. 3    ein Blockfunktionsschaltbild einer zweiten Variante einer Regeleinrichtung

Beim erfindungsgemässen Regelverfahren wird an der zu regelnden Vorrichtung wenigstens eine Zustandsgrösse, beispielsweise die Spannung oder der Strom oder die Leistung,
abgegriffen und einem Regelkreis 220 zugeführt. In diesem
wird die Zustandsgrösse umgeformt und in einer Simuliereinrichtung 223 wird mit den Zustandsgrössen der Verlauf
jeder Betriebskenngrösse der Vorrichtung simuliert. Mit
diesem Verlauf sowie mit den Vorrichtungsparametern werden
Rückkoppelsignale zur Regelung der Vorrichtung erzeugt.

Bei der Herstellung jedes Rückkoppelsignals wird das der
Zustandsgrösse entsprechende, abgegriffene und umgeformte
Signal mit Signalen, welche spezifischen Geräteeigenschaften entsprechen, den Vorrichtungsparametern, verknüpft.
Beispielsweise mit Signalen für den jeweiligen Typ der
Vorrichtung 100 und Maschinenkonstanten. Die Simuliereinrichtung 223 simuliert das Verhalten der Vorrichtung, d.h.
den Verlauf des Wertes von wenigstens einer der Betriebskenngrössen der Vorrichtung in Abhängigkeit von den Zustandsgrössen und den Vorrichtungsparametern. Beispielsweise kann bei einer elektrothermischen Schneidvorrichtung

./.

- 5 -                     0134190

eine dieser Betriebskenngrössen die Temperatur am Schneiddraht sein. Der bei Inbetriebnahme der Vorrichtung erforderliche, besonders rasche Anstieg dieser Schneiddrahttemperatur erfolgt zwischen der Leerlauf- und Arbeitstemperatur.

Die Simulation kann beispielsweise exakt mit der an die
Vorrichtung angelegte Leistung oder einer zu dieser exakt
proportionalen Grösse als Zustandsgrösse erfolgen. Anstelle der Leistung könnte aber auch ein anderer, für die
Funktion der Vorrichtung charakteristischer Parameter verwendet werden.

Die Regelung des Wertverlaufs der Betriebskenngrössen kann
entweder nur unter Berücksichtigung der Werte von Systemparametern vorgenommen werden. Der Wertwechsel verläuft
dann nach einer Betriebskennlinie, die sich gemäss diesen
Werten der Systemparameter einstellt. Er ist nicht abhängig von einer eventuell vorgegebenen oder vorgebbaren Betriebskennlinie. Oder es kann der Wertverlauf der Betriebskenngrössen in Abhängigkeit von einer vorgegebenen Soll-Betriebskennlinie erfolgen, wobei die sich einstellende Ist-
Betriebskennlinie mit der Soll-Betriebskennlinie verglichen wird. Gemäss diesem Vergleich, bzw. der Abweichung
der Ist-Werte von der Soll-Betriebskennlinie, werden die
Werte von Systemparametern so nachgeregelt, dass sich der
Werteverlauf der Betriebskenngrössen gemäss der Soll-Betriebskennlinie vollzieht. Dadurch ist es möglich, bei jeder Belastung und unabhängig von der Anzahl der Vorrichtungen annähernd dieselbe Hochlaufzeit einzuhalten.

Grundlegend für dieses Regelverfahren, mit beispielsweise
der Temperatur am Schneiddraht als einer Betriebskenngrös-

                                                    ./.

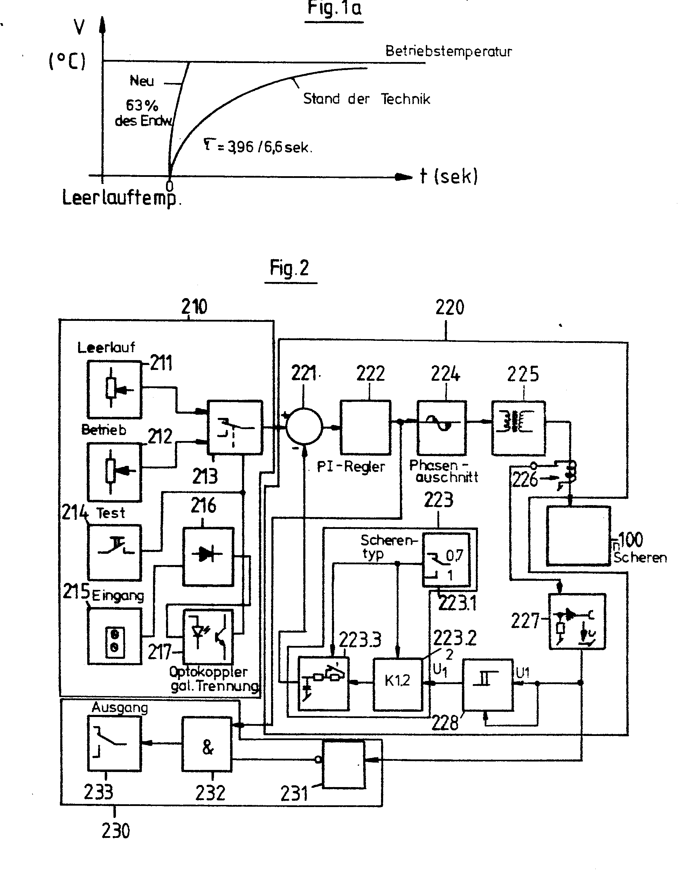

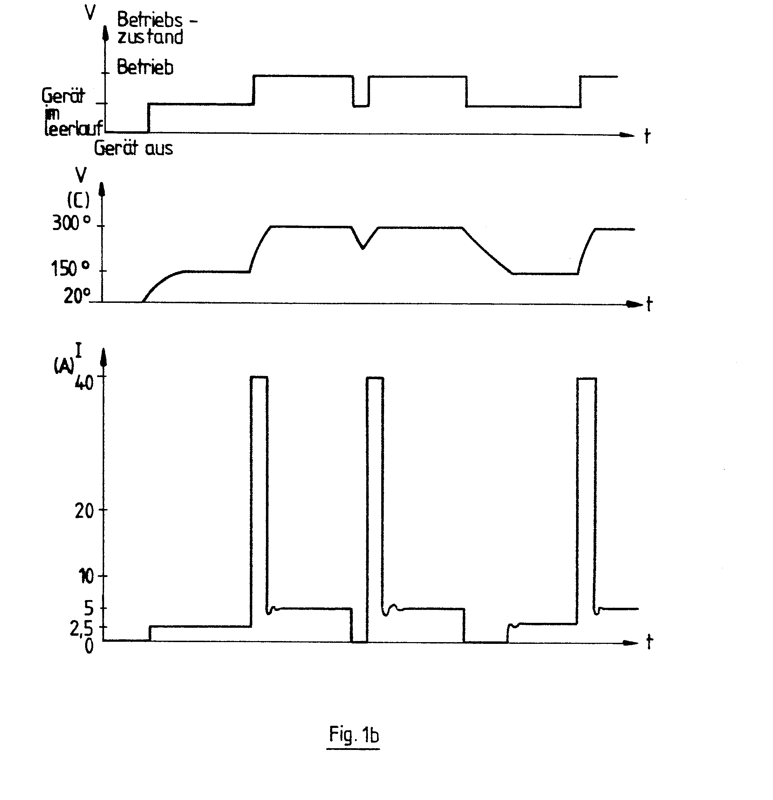

se, ist die Wahl einer wesentlich höheren Aufheiz-Arbeitstemperatur für die Regelung als der tatsächlichen Arbeitstemperatur. Dadurch kann man einen wesentlich steileren Bereich der Kennlinie, beispielsweise einer e-Funktion, auswählen und erhält somit ein entsprechend kürzeres Zeitintervall für den Aufheizvorgang auf die tatsächliche Arbeitstemperatur. Bei Erreichen derselben hält man diese Temperatur durch die Regelung zeitlich konstant, d.h. die Kennlinie wird an diesem Punkt im wesentlichen durch einen geraden Ast ergänzt. Damit entfällt die sehr viel Zeit beanspruchende assymtotische Annäherung an die Arbeitstemperatur. Die Ueberschwingungsvorgänge zufolge der technischen Gegebenheiten liegen im allgemeinen in vernachlässigbaren Grössenordnungen. Ausserdem wird bei diesem Regelverfahren bei jedem Nachregelvorgang, entweder für die Einhaltung der konstanten Arbeitstemperatur oder nach einem Betriebsunterbruch und erfolgter teilweiser Abkühlung der elektrothermischen Schneidvorrichtung, die Regelung bei der dieser Abkühlung entsprechenden Endtemperatur begonnen, aber die Vorrichtung mit einem solchen Aufheizstrom beaufschlagt, als würde die Kennlinie ab dem Fusspunkt, also der Leerlauftemperatur, durchlaufen (Fig. 1a, 1b).

Ein solches Regelverfahren ist exakter und rascher durchführbar als andere. Dies insbesondere deshalb, weil immer dieselbe und eindeutig definierte Hochlaufkurve benützt wird.

Das Rückkoppelsignal wird einem Vergleichs- und Regelglied eingespeist, welches die Vorrichtung und andere Kreise, beispielsweise einen Steuerkreis, steuert.

./.

Die zu regelnde Vorrichtung kann, wie erwähnt, eine elektrothermische Schneidvorrichtung 100 für gewobenes Material sein. Solche Schneidvorrichtungen sind vorzugsweise an den Rändern einer Gewebebahn auf der Webmaschine montiert. Sie trennen die Gewebekanten an der laufenden Gewebebahn ab. Die so entstehende neue Gewebekante wird durch den Trennvorgang zugleich verfestigt, insbesondere verschweisst, wenn es sich um kunstfaserhaltiges Gewebe handelt.

Mit einer Regeleinrichtung 200 zur Steuerung und Regelung der Energiezufuhr und der Arbeitsschritte kann eine oder mehrere elektrothermische Schneidvorrichtungen 100 verbunden sein.

Ausser der elektrothermischen Trennung kann zur Herstellung einer dauerhaften Gewebekante auch eine Rollenschere mit einer Verfestigungseinrichtung oder dergleichen vorgesehen sein.

Eine erfindungsgemässe Regeleinrichtung 200 arbeitet nach dem eingangs dargestellten erfindungsgemässen Regelverfahren und weist eine Serienschaltung aus Eingangskreis 210, Regelkreis 220 und Steuerkreis 230 auf.

Der Eingangskreis 210 enthält je ein Einstell-Potentiometer 211 bzw. 212 für die Leerlauf- bzw. die Arbeitstemperatur, welche an einen Umschalter 213 zur Umschaltung von einem Betriebszustand in den anderen angeschlossen sind. An diesem liegt einerseits ein Testknopf 214, mit welchem durch Drücken vom Leerlauf- in den Arbeits-Zustand geschaltet werden kann und zugleich zur Kontrolle eine Anzeigelampe eingeschaltet wird. An einen Betriebssignal-Eingang

./.

215 für ein Betriebssignal der Webmaschine oder dergleichen (denn nur bei Betrieb der Maschine soll die Bearbeitungsvorrichtung in Betrieb genommen werden können) ist ein Gleichrichter 216 und an diesen ein Trennelement 217 zur galvanischen Trennung der Regeleinrichtung 200 vom Netz, z.B. durch einen Optokoppler, angeschlossen, welches andererseits mit dem Umschalter 213 verbunden ist.

Der Ausgang dieses Umschalters 213 ist der Ausgang des Eingangskreises 210, welcher an einem Vergleichsglied 221 des Regelkreises 220 liegt. Dieses liegt auch am Ausgang einer Simuliereinrichtung 223 des Regelkreises 220 und führt einen Soll-/Ist-Wert-Vergleich zwischen diesen beiden Eingangssignalen durch. Der am Vergleichsglied 221 angeschlossene PI-Regler 222 gleicht das Resultat des Soll-/Ist-Wert-Vergleichs auf der Regelstrecke auf Null ab. In Serie zu diesem PI-Regler 222 liegt eine Phasenanschnittsteuerung 224, welche den Phasenanschnittwinkel in Abhängigkeit von der Reglerausgangsspannung steuert. Mit der Phasenanschnittsteuerung 224 ist ein Transformator 225 verbunden, an dessen Sekundärseite die Vorrichtung 100, beispielsweise wenigstens eine elektrothermische Schere, liegt.

Anstelle eines PI-Reglers kann auch ein P-, PD- oder PID-Regler verwendet werden. Möglich ist auch einen Zustandsregler als P-Glied in der Rückführleitung, also zwischen dem Kennlinienregelglied 223.2 und dem Vergleichsglied 221, anzuordnen. Auch kann bei der Regelung mit mehreren Zustandsgrössen eine Zustandsreglerstruktur vorgesehen sein.

./.

Zwischen dem Transformator 225 und den Scheren ist ein
Stromwandler 226 zur Abnahme der geregelten Ausgangsgrösse, dem Strom, vorgesehen. Dieser Strom wird über
einem Widerstand als Spannungsgrösse dargestellt und
in einem Gleichrichter 227 in Gleichspannung umgewandelt,
welche in einem Quadrierglied 228 quadriert wird, um eine
der Leistung entsprechende Eingangsgrösse für die Simuliereinrichtung 223 zu erhalten.

Ist die zu regelnde Vorrichtung für den Regelkreis eine
konstante Last, dann wird als Ausgangsgrösse der Strom
geregelt. Es ist aber auch, je nach dem Anwendungsfall,
die Regelung der Spannung möglich. Dies insbesondere,
wenn mehrere zu regelnde Vorrichtungen zueinander elektrisch parallel geschaltet sind.

Die Simuliereinrichtung 223 weist ein Eingabeglied 223.1 zur Eingabe eines vom Typ der Vorrichtung 100 abhängigen Parameters auf, wobei diese Eingabe manuell oder automatisch und anbaubedingt erfolgen kann. Ausserdem ist in der Simuliereinrichtung 223 ein Glied 223.2 zur scherentypkonformen Aenderung des Verstärkungsfaktors, welches vom Eingabeglied 223.1 angesteuert wird, vorgesehen. Mit diesem und dem Glied 223.2 ist ein Kennlinienglied 223.3 verbunden, das in Abhängigkeit vom Typ der Bearbeitungsvorrichtung und ihrem, ihr entsprechend im Glied 223.2 umgeformten Regelparameter den Kennlinienast für die Temperaturanhebung von der Leerlauftemperatur zur Arbeitstemperatur ermittelt und dementsprechend laufend ein Rückkopplungssignal als Output an das Vergleichsglied 221 abgibt. In diesem Simulierglied 223 wird im vorliegenden Fall das Temperaturverhalten in Abhängigkeit von der Zeit der Bearbeitungsvorrichtung simuliert und ein entsprechendes Rückkopplungssignal abgegeben.

Ausser der Berücksichtigung des Typs der Bearbeitungsvorrichtung können bei einer anderen Variante auch noch Parameter, welche durch den Anbau an die Verarbeitungsmaschine, beispielsweise die Webmaschine, bedingt sind, in die Simuliereinrichtung 223 eingespeist werden. Dies kann beispielsweise durch ein modifiziertes Glied 223.2 erfolgen.

Das Glied zur Aenderung des Verstärkungsfaktors 223.2 kann auch an einer anderen Stelle der Regeleinrichtung 200, beispielsweise vor dem Umschalter 213, angeschlossen sein.

Der Regelkreis 220 ist so ausgelegt, dass er bei jedem Aufheizregelvorgang immer denselben Kennlinienast durchläuft. Nach einem Betriebsunterbruch und erfolgter teil-

./.

weiser Abkühlung der elektrothermischen Schneidvorrichtung setzt die Regelung bei der dieser Abkühlung entsprechenden Endtemperatur mit dem dem Fusspunkt der Kennlinie, der Leerlauftemperatur, entsprechenden sehr hohen Wert des Aufheizstromes ein (siehe Fig. 1b).

Am Ausgang des PI-Reglers 222 und am Ausgang des Gleichrichters 227 liegt je der Steuerkreis 230. Der PI-Regler-Anschluss liegt an einem Und-Glied 232, dessen anderer Eingang an einem Inverter 231 liegt, der am Gleichrichter angeschlossen ist. Das Und-Glied 232 steuert ein Ausgangs-Relais 233 für die Steuerung einer Maschine, beispielsweise einer Webmaschine.

Der Steuerkreis 230 gibt ein Abstellsignal an die Verarbeitungsmaschine nur ab, wenn eine Beschädigung der Vorrichtung 100 auftritt. In den regelkreisbedingten Phasen der Stromlosigkeit wird kein Abstellsignal erzeugt.

Bei einer anderen Form der erfindungsgemässen Regeleinrichtung ist ein Eingabeglied 310 zur Eingabe und/oder Anzeige der Werte für die Leerlauftemperatur, die Arbeitstemperatur, den Typ der zu regelnden Vorrichtung sowie der Funktionen für Eichen und Testen mit einem Rechner 320 verbunden. Dieser ist auch an ein Eingangsglied 350 zur Aufnahme eines Betriebssignals, beispielsweise von einer Webmaschine bei Webbeginn, gelegt. Ein Steuerkreis 330, der die zu regelnde Vorrichtung mit Energie versorgt und die Signale einer oder mehrerer ihrer Zustandsgrössen herleitet und aufbereitet, ist ebenfalls mit dem Rechner 320 verbunden. Neben den Mitteln für die Abnahme und Aufbereitung der Signale für wenigstens eine der Zustandsgrössen, beispielsweise Stromwandler 332 und Gleichrichter 333 usw.

./.

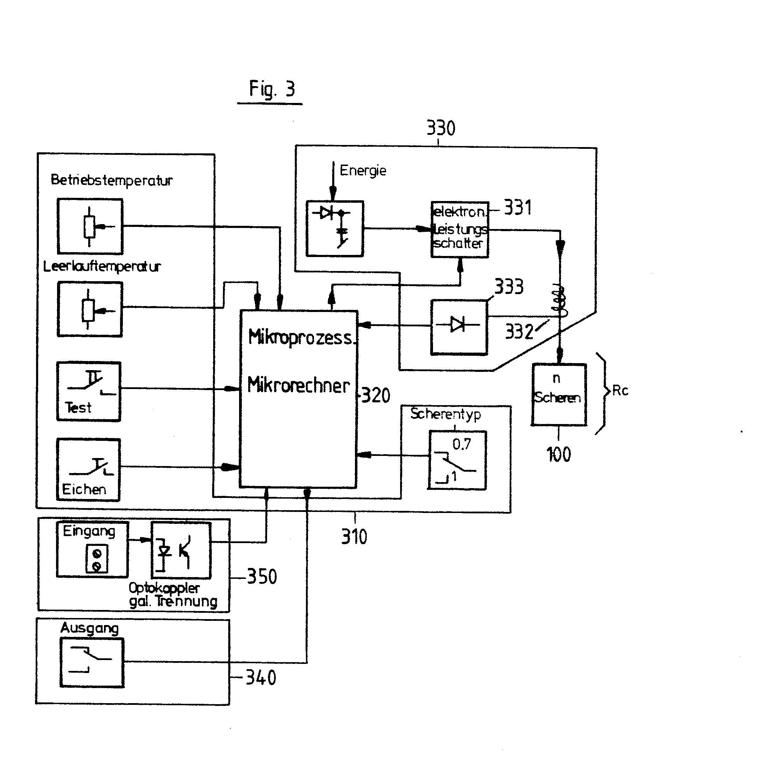

weist der Steuerkreis 330 einen elektronischen Leistungsschalter 331 auf. Dieser und der Gleichrichter 333 ist mit dem Rechner 320 verbunden, wobei Signale vom Rechner zum Leistungsschalter bzw. vom Gleichrichter zum Rechner fliessen. Der Stromwandler 332 sitzt vor der zu regelnden Vorrichtung 100 an der vom elektronischen Leistungsschalter 331 kommenden Leitung. Dieser stellt die Breite der Impulse für die Energiezufuhr an die Vorrichtung aufgrund der vom Rechner kommenden Signale im Sinn einer Pulsbreitensteuerung ein. Ausserdem ist an den Rechner ein Ausgangsglied 340 angeschaltet, das Mittel zur Abgabe von Steuersignalen an eine mit der Vorrichtung verkettete Maschine, beispielsweise eine Webmaschine, aufweist (Fig.3).

Die zu regelnde Vorrichtung 100 kann insbesondere eine Hitzdrahtschereinrichtung oder eine Rollenschereinrichtung, welche Mittel zur thermischen Verfestigung von Webkanten aufweist, sein.

21.06.1983 RT/nb
83002/p

0134190

B E Z U G S Z E I C H E N

100    Bearbeitungsvorrichtung / Vorrichtung
       (Hitzdrahtschereinrichtung, mechanische Schere,
        Vorrichtung zum Verfestigen des Schnittrandes
        der Gewebebahn)


Fig. 2

200    Regeleinrichtung
210    Eingangskreis
220    Regelkreis
230    Steuerkreis


210    Eingangskreis
211    Leerlauf-Potentiometer
212    Arbeits- Potentiometer
213    Umschalter
214    Testknopf
215    Betriebssignaleingang
216    Gleichrichter
217    Trennelement

./.

- 13 -                                    0134190

220    Regelkreis
221    Vergleichsglied
222    PI-Regler
223    Simuliereinrichtung
224    Phasenanschnittsteuerung
225    Transformator
226    Stromwandler
227    Gleichrichter
228    Quadrierglied
229


223.1  Eingabeglied
223.2  Glied zur Aenderung des Verstärkungsfaktors /
       Glied zur Eingabe spez. Vorrichtungsparameter
223.3  Kennlinienregelglied




230    Steuerkreis
231    Inverter
232    Und-Glied
233    Ausgangsrelais




Fig. 3
300    Regeleinrichtung

310    Eingabeglied
311
312                                              ./.

0134190

320     <u>Rechner</u>     (µP)

330     <u>Steuerkreis</u>
331     elektronischer Leistungsschalter
332     Stromwandler
333     Gleichrichter

340     <u>Ausgangsglied</u>

350     <u>Eingangsglied</u>
351     Betriebssignaleingang
352     Trennelement

21.06.1983
83002/P

REGELVERFAHREN UND REGELEINRICHTUNG FUER EINE VORRICHTUNG
ODER VORRICHTUNGSGRUPPE UND VORRICHTUNG MIT EINER REGEL-
EINRICHTUNG

P A T E N T A N S P R U E C H E

1) Regelverfahren für eine Vorrichtung oder Vorrichtungsgruppe,

d a d u r c h  gekennzeichnet, dass

- wenigstens eine Zustandsgrösse der Vorrichtung von
ihr oder ihrem Steuerkreis abgenommen wird,

- dass diese Zustandsgrösse einem Simulierglied zur
Simulation einer Betriebskenngrösse der Vorrichtung
zugeführt wird und

- dass die simulierte Betriebskenngrösse zur Regelung
der Vorrichtung einem Vergleichs- und Regelglied zugeführt wird.

2) Regelverfahren nach Anspruch 1, dadurch gekennzeichnet,
dass die Simulation des Verlaufs der Betriebskenngrösse gemäss den Werten der Systemparameter vorgenommen
wird.

3) Regelverfahren nach Anspruch 1, dadurch gekennzeichnet,
dass die Regelung gemäss dem Momentanwert der Zustandsgrösse und der simulierten Betriebskenngrösse vorgenommen wird.

4) Regelverfahren nach Anspruch 1, dadurch gekennzeichnet,
dass die Regelung gemäss dem Momentanwert der Zustandsgrösse, dem Verlauf der simulierten Betriebskenngrösse

./.

und einem Soll-Verlauf der Betriebskenngrösse vorgenommen wird.

5) Regelverfahren nach Anspruch 4, dadurch gekennzeichnet, dass zur Abgleichung des Verlaufs der simulierten Betriebskenngrösse mit dem Soll-Verlauf die Systemparameter geregelt werden.

6) Regelverfahren nach Anspruch 1, dadurch gekennzeichnet, dass die Zustandsgrösse die von der Vorrichtung aufgenommene Leistung oder eine ihr proportionale Grösse ist.

7) Regelverfahren nach Anspruch 1, dadurch gekennzeichnet, dass der zum Betriebszustand der Vorrichtung führende Ast des Verlaufs der Betriebskenngrösse von der Art einer e-Funktion im Bereich mit sehr grosser Steigung ist.

8) Regeleinrichtung zur Durchführung des Regelverfahrens nach Anspruch 1, dadurch gekennzeichnet, dass die Regeleinrichtung (200) einen Eingangskreis (210), einen an diesen angeschlossenen Regelkreis (220) und einen mit diesem verbundenen Steuerkreis (230) enthält.

9) Regeleinrichtung nach Anspruch 8, dadurch gekennzeichnet, dass der Eingangskreis (210) je ein Einstellorgan für die Sollgrössen (Leerlauf-Temperatur bzw. Arbeits-Temperatur) (211, 212) aufweist, welche an ein Schaltorgan (213) zur Umschaltung von der Leerlauf- zur Arbeitsfunktion und umgekehrt angeschlossen sind, das einerseits mit einem manuell bedienbaren

./.

Testknopf (214) und andererseits einem galvanisch getrennten Eingang (215) der Maschine verbunden ist und ausgangsseitig am Regelkreis (220) liegt.

10) Regeleinrichtung nach Anspruch 8, dadurch gekennzeichnet, dass der Regelkreis (220) eingangsseitig ein Vergleichsglied (221) zum Soll-Ist-Wertvergleich aufweist und mit einem PI-Regler (222), einer Phasenanschnittsteuerung (224), einem Trafo (225) für den Betrieb der Vorrichtung (100) und mit dieser in Serie geschaltet ist, wobei vor der Vorrichtung (100) ein Stromwandler (226) zur Messung des Stromes an dieser angeordnet ist, der mit einem Gleichrichter (227), einem Quadrierglied (228), einem Simulierglied (223) zur Berücksichtigung des Vorrichtungsverhaltens und dem Vergleichsglied (221) in Serie liegt.

11) Regeleinrichtung nach Anspruch 8., dadurch gekennzeichnet, dass der Steuerkreis (230) zur Steuerung der Vorrichtung oder einer Maschine einen Inverter (231) aufweist, der mit seinem Eingang am Gleichrichter (227) und mit seinem Ausgang an einem Und-Glied (232) liegt, dessen anderer Eingang am Ausgang des PI-Reglers (222) angeschlossen ist, wobei das Und-Glied (232) ein Ausgangsrelais (233) ansteuert.

12) Regeleinrichtung nach Anspruch 10, dadurch gekennzeichnet, dass das Simulierglied (223) ein Eingabeglied (223,1 223.2) für spezifische Vorrichtungsparameter und ein Kennlinienregelglied (223.3) zur Einspeisung von dem jeweiligen Vorrichtungstyp entsprechenden Kennlinienparametern, z.B. Zeitkonstanten, in den Regelkreis (220) aufweist.

./.

13) Regeleinrichtung zur Durchführung des Regelverfahrens nach Anspruch 1, dadurch gekennzeichnet, dass ein Eingabeglied (310) zur Eingabe und/oder Anzeige der Werte für die Leerlauftemperatur, die Arbeitstemperatur, den Typ der zu regelnden Vorrichtung, sowie der Funktionen für Eichen und Testen mit einem Rechner (320) verbunden ist, der auch an einem Eingangsglied (350) zur Aufnahme eines Betriebssignales sowie an einem Steuerkreis (330), einerseits zur Einspeisung und Dosierung der Energie zur Vorrichtung (100) und andererseits zur Abnahme und Aufbereitung des Wertes wenigstens einer Zustandsgrösse der Vorrichtung (100) und deren Einspeisung zum Rechner (320) und an einem Ausgangsglied (340) liegt, welches für die Steuerung einer mit der Vorrichtung verketteten Maschine eingerichtet ist (Fig. 3).

14) Regeleinrichtung nach Anspruch 13, dadurch gekennzeichnet, dass der Steuerkreis (330) einen elektronischen Leistungsschalter (331) aufweist, an dem vom Rechner (320) die maximale Pulsbreite bei einer Pulsbreitensteuerung für die Energiesteuerung eingeregelt wird.

15) Vorrichtung mit einer Regeleinrichtung nach einem der Ansprüche 8-14, dadurch gekennzeichnet, dass diese Vorrichtung eine Vorrichtung zum Abtrennen von Webkanten an Gewebebahnen ist.

16) Vorrichtung nach Anspruch 15, dadurch gekennzeichnet, dass die Vorrichtung eine Hitzdrahtschereinrichtung ist.

./.

17) Vorrichtung nach Anspruch 15, dadurch gekennzeichnet, dass die Vorrichtung eine mechanische Schereinrichtung ist, welche Mittel zur Verfestigung der Schnittkanten der Gewebebahn enthält.

18) Vorrichtung nach Anspruch 17, dadurch gekennzeichnet, dass die mechanische Schereinrichtung eine Rollenschere ist.

21.06.1983 RT/nb
83002/P

Fig.1a

V
(°C)                                    Betriebstemperatur
        Neu
     63%                    Stand der Technik
     des Endw.
                  $\tau$ = 3,96 / 6,6 sek.
                                        t (sek)
     0
Leerlauftemp.

Fig.2

210                                     220

Leerlauf
        211
Betrieb
        212
        213
214 Test        216
215 Eingang
        217
Optokoppler
gal. Trennung

221   222   224   225
PI-Regler   Phasen-ausschnitt
226
100 Scheren
Scheren-typ   223
                  0,7
                  1
        223.1
223.3   223.2
        U1   U1
K1,2   227
228

Ausgang
        &
233   232   231
230

Fig. 1b

Fig. 3